# EUROPEAN PATENT SPECIFICATION

(11) **EP 2 079 295 B1**
(45) Date of publication and mention of the grant of the patent: **19.01.2011**
(21) Application number: 07821450.9
(22) Date of filing: 17.10.2007
(51) Int. Cl.: A01B 23/02, A01B 19/02

(54) **GUIDE PLATE FOR AN AGRICULTURAL IMPLEMENT**
FÜHRUNGSPLATTE FÜR EIN LANDWIRTSCHAFTLICHES GERÄT
PLAQUE DE GUIDAGE POUR UNE APPLICATION AGRICOLE

(30) Priority: 08.11.2006 SE 0602405
(43) Date of publication of application: 22.07.2009
(73) Proprietor: Väderstad-Verken AB, 590 21 Väderstad (SE)
(72) Inventor: TARLAND, Mikael, 582 34 Linköping (SE); DAHL, Jörgen, 599 91 Ödeshög (SE)
(74) Representative: Karlsson, Leif Karl Gunnar
(86) International application number: PCT/EP2007/061085
(87) International publication number: WO 2008/055763

(56) References cited:
- EP-A- 0 704 146
- DE-A1- 3 127 064
- GB-A- 206 533
- SE-L- 0 500 275
- US-A- 1 751 493

## Description

The invention refers to guide plate for an agricultural implement according to the non-characterising portion of Claim 1.

### TECHNICAL AREA

Tractor-drawn agricultural implement for soil tillage are often provided with a number of soil tilling tools in the form of tines provided with a point and guide plate designed to achieve the desired tillage and to create a desire soil flow around the tool.

The point and guide plate constitute wearing parts that must be replaced relatively often by the farmer. A solution that allows fast and easy exchange is shown in the Swedish patent application 0500275-3.

The tool shown in the mentioned application functions very well on light soils where soil and straw residues are thrown upwards whereby a fine distribution and straw incorporation is achieved. On heavier soils the soil thrown up can tend to lump together in elongated lumps. This then leads to an uneven surface with decreased straw incorporation and thereby inadequate outcome of the soil tillage, while at the same time large amounts of soil adhere to and remain lying on the framework of the agricultural implement.

### AIM OF THE INVENTION

the aim of the invention is to achieve an agricultural implement with improved straw incorporation on heavier soils.

Since many farmers have both fields with light and heavy soils it is desirable that the tool can be easily adjusted for optimal tillage between different soil types.

### SUMMARY OF THE INVENTION

The aim of the invention is solved through a guide plate according to Claim 1. The guide plate has an essentially concave surface with an in the travel direction essentially forward facing normal direction. This hereby allows soil to be thrown forwards relative to the agricultural implement which prevents formation of soil lumps that are thrown straight up. An upper end portion extends in the travel direction backwards from a transition portion and is adapted to abut against a bearer. This allows the guide plate to be easily replaced by a known flatter guide plate without the loading pattern on the bearer being altered perceptibly, which in turn allows the farmer to easily exchange guide plate during soil tillage of fields with different composition regarding soil textures, straw residues and climatic conditions.

According to Claim 2 the guide plate is comprised of a metal plate where the transition portion is bent. This solution is cheap, reliable and easy to manufacture.

Claim 3 shows a preferred embodiment with a guide plate with essentially constant thickness and width over its entire length. In addition to the manufacturing-related simplicity, this also means that descending soil and straw residues from the actual or some other tool is prevented from fastening between the guide plate and the bearer.

Furthermore Claim 4 describes a dimension relationship that has been shown to give favourable results.

Finally Claims 5 and 6 describe advantageous embodiments that allow fast and easy exchange of guide plates, both due to wear and when changing to another type of guide plate.

Further characteristics and advantages with the invention are described in more detail below with the help of an embodiment with reference to the attached drawings.

### DRAWING SUMMARY

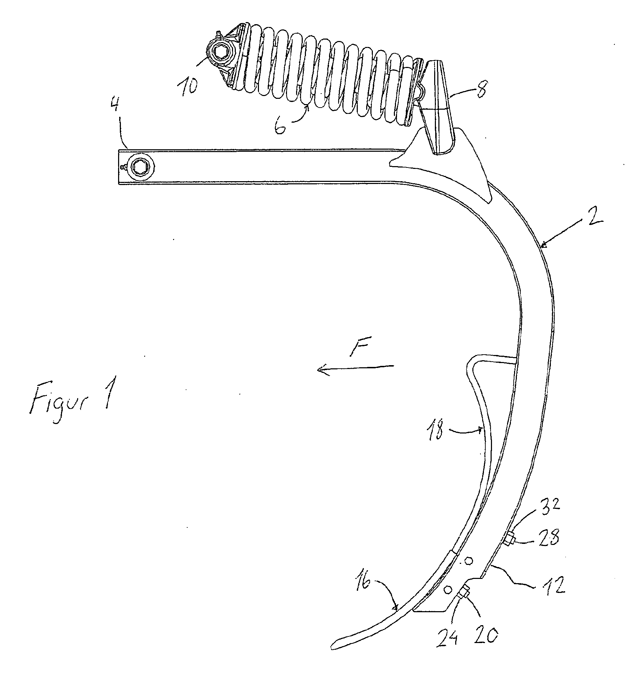

Figure 1 shows a side view of a soil tilling tool.

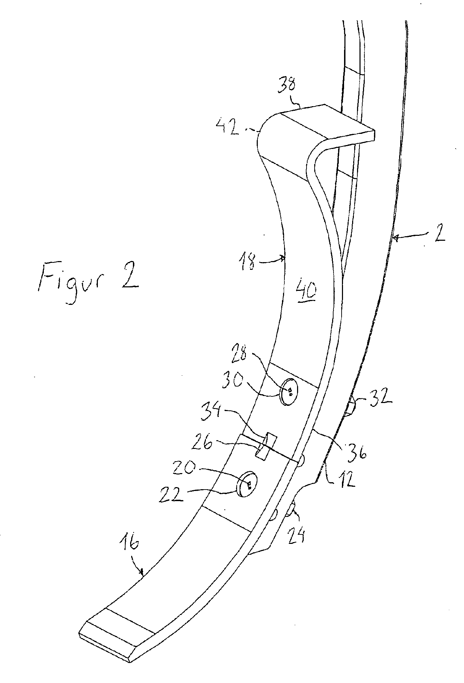

Figure 2 shows a perspective view of the lower part of the tool.
Figure 3 shows a perspective view of a guide plate.

### DETAILED DESCRIPTION OF AN EMBODIMENT

The soil trilling tool shown in the drawings comprises as essential parts a bearer 2, here in the form of a tine, a point 16 and a guide plate 18.

The tine 2 is at an upper end 4 journalled in bearings at a not shown frame part of an agricultural implement that is moved in a travel direction F with the help of a draught vehicle, preferably a tractor. The agricultural implement is provided with a plurality of essentially similar soil tilling tools. A springing member 6 in the form of a helical spring is in its one end 10 fastened at the not shown frame part and in its other end 8 at the tine, with the aim of allowing relative movement between the tine 2 and the frame part. At the lower end 12 of the tine the point 16 and the guide plate 18 are assembled.

The point 16 contains a through hole 22. The point 16 is secured at the tine 2 by a bolt 20 that runs through the hole 22 and a hole (not shown) through the tine 2 and is locked with a nut 24 at the side of the tine 2 which is opposite from the point 16.

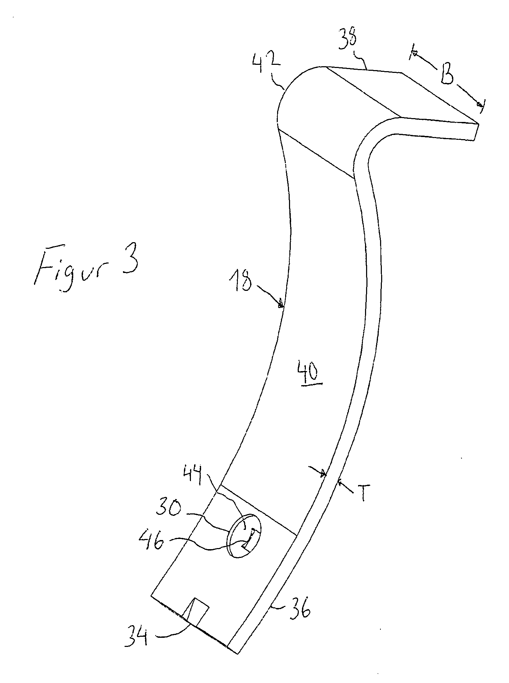

The guide plate 18 according to the invention is preferably constituted of a single metal plate and comprises a lower end portion 36 and an upper end portion 38. The guide plate 18 has a preferably essentially constant thickness T and width B over its entire length and contains a through hole 30 at an essentially concave surface 40 with an in the travel direction F essentially forward facing nominal direction. The guide plate 18 is secured at the tine 2 in a corresponding way to the point 16 by a bolt 28 that runs through the hole 30 and a not shown hole through the tine 2 and is locked with a nut 32 at the opposite side of the tine 2 from the guide plate 16. As shown in Figure 3 the hole 30 comprises a conical surface 44 and a square hole 46 to prevent turning of the bolt 28.

The essentially concave surface 40 extends from the lower end portion 36 up to a preferably bent transition portion 42. The upper end portion 38 of the guide plate extends in the travel direction F backwards from the transition portion 42 and abuts against the tine 2. The upper portion 38 preferably abuts essentially perpendicular to the forward facing surface of the tine 2. The length of the concave surface 40 is preferably 4-6 times greater than the length of the upper end portion 38. This design allows the upper part of the concave surface 40 to extend forwards in the travel direction which gives a soil flow forwards whereby any soil lumps formed are broken up.

At the lower end portion 36 of the guide plate 18 is arranged a locking element 34 that is comprised of a protruding portion that interacts with a not shown recess in the tine 2. Turning between the guide plate 18 and the tine 2 is hereby prevented. In the same way at the upper end of the point 16 is arranged a protruding portion 26 that interacts with the recess in the tine 2. Turning between the point 16 and the tine 2 is hereby also prevented. The protruding portions 26, 34 are suitably formed through direct working of the guide plate 13 and the point 16 respectively, suitably through stamping or bending.

The lower end portion 36 of the guide plate 18 advantageously abuts against the upper end of the point 16. This also gives (in addition to favourable soil tillage) a certain relative locking of the component parts.

The invention can be varied within the framework of the claims. For example the fastening of the guide plate 18 at the tine 2 can be designed in another way, such as through replacing the protruding portion 34 with a different bolt connection. Furthermore the upper end portion 38 can be provided with rearwards facing studs to hold the tine 2 in order to further prevent turning between them. The angle of the upper end portion 38 relative to the travel direction can also be varied.

## Claims

1. A guide plate (18) for a soil tilling tool at an agricultural implement, which guide plate (18) comprises at least one hole (30) intended to receive a fastening element for fastening against a bearer (2), wherein the guide plate (18) comprises an essentially concave surface (40) with a normal direction that is directed essentially forwards in the travel direction (F), **characterised in that** the concave surface (40) extends from a lower end portion (36) to a transition portion (42), and an upper end portion (38) that extends in the travel direction backwards from the transition portion (42), which upper end portion (38) is adapted to abut against the bearer (2).

2. A guide plate (18) according to Claim 1, ***characterised in* that** it is comprised of a metal plate where the transition portion (42) is bent.

3. A guide plate (18) according to either one of the preceding Claims, ***characterised in* that** it has essentially constant thickness (T) and width (B) over its entire length.

4. A guide plate (18) according to any one of the preceding Claims, ***characterised in* that** the length of the concave surface (40) is 4-6 times greater than the length of the upper end portion (38).

5. A guide plate (18) according to any one of the preceding Claims, ***characterised in* that** a locking element (34) is arranged at the lower end portion (36) with the aim of interacting with an interacting locking element at the bearer (2) to prevent turning between the guide plate (18) and the bearer (2).

6. A guide plate (18) according to Claim 5, ***characterised in* that** the locking element (34) is comprised of a protruding portion adapted to interact with a recess in the bearer (2).

## Patentansprüche

1. Führungsplatte (18) für ein Bodenbsarbeitungswerkzeug für ein landwirtschaftliches Gerät, wobei die Führungsplatte (18) mindestens ein Loch (30) umfasst, das ein Befestigungseiement zum Befestigen an einem Träger (2) aufnehnen soll, wobei die Führungsplatte (18) eine im Wesentlichen konkave Fläche (40) mit einer normalen Richtung umfasst, die im Wesentlichen in Fahrtrichtung (F) vorwärts gerichtet ist, **dadurch gekennzeichnet, dass** sich die konkave Fläche (40) von einem unteren Endabschnitt (36) zu einem Übergangsabschnitt (42) erstreckt, und einem oberen Endabschnitt (38), der sich in Fahrtrichtung rückwärts vom Übergangsabschnitt (42) erstreckt, wobei der obere Endabschnitt (38) angepasst ist, an dem Träger (2) anzuliegen.

2. Führungsplatte (18) nach Anspruch 1, **dadurch gekennzeichnet, dass** sie eine Metallplatte umfasst, wo der Übergangsabschnitt (42) gebogen ist.

3. Führungsplatte (18) nach einem der vorhergehenden Ansprüche, **dadurch gekennzeichnet, dass** sie im Wesentlichen eine konstante Dicke (T) und Breite (B) über ihre gesamte Länge aufweist.

4. Führungsplatte (18) nach einem der vorhergehenden Ansprüche, **dadurch gekennzeichnet, dass** die Länge der konkaven Fläche (40) 4 - 6 Male größer ist, als die Länge des oberen Endabschnitts (38),

5. Führungsplatte (18) nach einem der vorhergehenden Ansprüche, **dadurch gekennzeichnet, dass** ein Verriegehngselement (34) an dem unteren Endabschnitt (36) mit dem Ziel angeordnet ist, mit einem wechselwirkenden Verriegelungselement an dem Träger (2) in Wechselwirkung zu treten, um ein Drehen zwischen der Führungsplatte (18) und dem Träger (2) zu verhindern.

6. Führungsplatte (18) nach Anspruch 5, **dadurch gekennzeichnet dass** das Verriegelungselement (34) einen vorstehendem Abschnitt umfasst, der angepasst ist, mit einer Aussparung in dem Träger (2) in Wechselwirkung zu treten.

## Revendications

1. Plaque de guidage (18) pour un outil pour le travail du sol sur une application agricole, laquelle plaque de guidage (18) comprend au moins un trou (30) destiné à recevoir un élément de fixation pour la fixation contre un support (2), la plaque de guidage (18) comprenant une surface essentiellement concave (40) avec une direction normal qui est dirigée essentiellement vers l'avant dans le sens de la marche (F), **caractérisée en ce que** la surface concave (40) s'étend d'une portion d'extrémité inférieure (36) à une portion de transition (42), et une portion d'extrémité supérieure (38) qui s'étend dans le sens de la marche vers l'arrière depuis la portion de transition (42), laquelle portion d'extrémité supérieure (38) est adaptée pour venir en appui contre le support (2).

2. Plaque de guidage (18) selon la revendication 1, **caractérisée en ce qu'**elle comprend une plaque métallique là, où la portion de transition (42) est courbée.

3. Plaque de guidage (18) selon l'une ou l'autre des revendications précédentes, **caractérisée en ce qu'**elle présente une épaisseur (T) et une largeur (B) essentiellement constantes sur toute sa longueur.

4. Plaque de guidage (18) selon l'une quelconque des revendications précédentes, **caractérisée en ce que** la longueur de la surface concave (40) est 4 à 6 fois supérieure à la longueur de la portion d'extrémité supérieure (38).

5. Plaque de guidage (18) selon l'une quelconque des revendications précédentes, **caractérisée en ce qu'**un élément de verrouillage (34) est agencé sur la portion d'extrémité inférieure (36) avec l'objectif d'interagir avec un élément de verrouillage interagissant sur le support (2) pour empêcher une rotation entre la plaque de guidage (18) et le support (2).

6. Plaque de guidage (18) selon la revendication 5, **caractérisée en ce que** l'élément de verrouillage (34) comprend une portion saillante adaptée pour interagir avec un évidement dans le support (2).
